# EUROPÄISCHE PATENTANMELDUNG

(11) **EP 0 915 128 A1**
(43) Veröffentlichungstag der Anmeldung: **12.05.1999**
(21) Anmeldenummer: 98811020.1
(22) Anmeldetag: 13.10.1998
(51) Int. Cl.: C08J 9/14, C08J 9/02, C08L 83/04

(54) **Silicon-Schaummassen**

(30) Priorität: 10.11.1997 DE 19749660
(71) Anmelder: HILTI Aktiengesellschaft, 9494 Schaan (LI)
(72) Erfinder: Andresen, Arndt, 86899 Landsberg/Lech (DE); Bertsch, Thorsten, 86946 Mundraching (DE); Rump, Stefan, 86899 Landsberg/Lech (DE); Münzenberger, Herbert, 65191 Wiesbaden (DE); Heimpel, Franz, 86444 Affing (DE)
(74) Vertreter: Wildi, Roland

(57) **Zusammenfassung**

Siliconmassen enthalten zur schnellen Verschäumung und Bildung standfester Schäume Lösungsmittel, die Treibgas bilden.

## Beschreibung

Die Erfindung betrifft verschäumbare Zwei-Komponenten-Siliconmassen mit einem Gehalt an der Verschäumung dienenden Bestandteilen und gegebenenfalls weiteren Bestandteilen.

Verschäumte Siliconmassen haben sich aufgrund ihrer vorteilhaften chemischen, physikalischen und biologischen Eigenschaften, wie Temperaturbeständigkeit, Elastizität und Haftungsvermögen in vielen Bereichen und besonders im Baubereich bewährt. Ein gewisser Nachteil ist der verhältnismäßig hohe Preis, zumal die üblichen verschäumbaren Siliconmassen eine Volumenvergrößerung von nur etwa 1:3 zulassen. Zudem ist bei diesen bekannten Systemen erst das vollständige Ausreagieren abzuwarten, so daß erst nach einer gewissen Wartezeit die Vollständigkeit einer Verfüllung kontrolliert und erforderlichenfalls erst dann eine Nachverfüllung vorgenommen werden kann. Weiter ist vielfach eine Schalung erforderlich.

Der Erfindung liegt die Aufgabe zugrunde, eine verschäumbare Siliconmasse zur Verfügung zu stellen, die wirtschaftlich eine Volumenvergrößerung von mindestens 1:5 ermöglicht, schnell zum Endvolumen des Schaums mit zudem hoher Standfestigkeit führt, so daß der Verfüllungsgrad sofort ersichtlich wird und andererseits beim Einbringen und Ausreagieren des Schaums die Notwendigkeit einer Schalung entfällt.

Die erfindungsgemäße Aufgabe wird bei einer verschäumbaren Zwei-Komponenten-Siliconmasse mit einem Gehalt an der Verschäumung dienenden und gegebenenfalls weiteren Bestandteilen dadurch gelöst, daß als Verschäumungsmittel ein Lösungsmittel enthalten ist, das unter Anwendungsbedingungen Treibgas bildet.

Als Beispiel und bevorzugte Gruppe von Siliconen werden Polysiloxane, namentlich niedr.Alkyl-Polysiloxane, insbesondere kautschukartige Polysiloxane benutzt. Zur Polymerisation kann beispielsweise die Polyadditionsreaktion von OH-funktionellen Polysiloxanen wie Hydroxypolymethylsiloxanen mit z.B. Vinylsilanen benutzt werden. Die Polysiloxane können beispielsweise auch mit Vinylsilanen oder SiH-Gruppen substituiert sein.

Als Verschäumungsmittel sind niedermolekulare, z.B. C₃-C₅-Kohlenwasserstoffe, Halogenkohlenwassserstoffe oder Ether enthalten, die unter Druck, d.h. in damit flüssiger Form, Lösungsmittel für die darin enthaltenen Silicone sind. Als Kohlenwasserstoffe sind Propan und/oder Butan bevorzugt, ebenso wie niedermolekulare Fluorchlorkohlenwasserstoffe. wie R 12. R 22, R 142b, Fluorkohlenwasserstoffe wie R 134a, R 152a und/oder Dimethylether. Die verflüssigten Treibgase wirken als Lösungsmittel für die enthaltenen Silicone, wodurch die Viskosität deutlich gesenkt wird, zugunsten der leichten Ausbringbarkeit. Die Verdampfung des Lösungsmittels (Überschreitung des Siedepunkts infolge Druckabfall) beim Ausbringen des Gemischs aus dem Druckbehälter (Anwendungsbedingungen) gewährleistet die schnelle Verschäumung und Bildung eines standfesten Schaums.

Die Viskosität kann z.B. auch durch das Molekulargewicht des Silicons gesteuert werden oder auch durch weitere an sich bekannte viskositätssteuernde Bestandteile und Füllmittel, wie hochdisperse, insbesondere hydrophobierte Kieselsäure, Alumosilikate, Magnesiasilikate, Carbonate, z.B. Kaolin. Kreide, Graphit, Pigmente, Stabilisatoren, Brandschutzadditive und dergleichen.

Als Verschäumungsmittel können weiter unter Anwendungsbedingungen durch chemische Reaktion Wasserstoff als Treibgas bildende Bestandteile enthalten sein. Die Bildung von Wasserstoff als Treibgas kann im Zeitpunkt der Ausbringung beispielsweise durch Polykondensation von Silanen und/oder H-funktionellen Polysiloxanen mit Alkoholen oder OH-funktionellen Polysiloxanen erfolgen. Die Wasserstoff-Bildungsreaktion wird durch Organo-Schwermetallkatalysatoren, insbesondere Platin- oder Rhodium-Katalysatoren wesentlich gefördert.

In den erfindungsgemäßen 2-Komponentenmassen sind die Reaktionspartner der Polyaddition bzw. -kondensation nämlich voneinander getrennt angeordnet - auch ein etwaiger Organoschwermetallkatalysator - in jedem Fall so, daß die Polymerisationsreaktion bzw. Wasserstoffbildung erst unter Anwendungsbedingungen, d.h. beim Ausbringen und Vermischen in Gang gesetzt wird.

Es hat sich bewährt, wenn die Organo-Metallkatalysatoren nicht in der gleichen Komponente wie die niedermolekularen Kohlenwasserstoffe enthalten sind. Regelmäßig enthalten beide Komponenten reaktive Silicone, wobei erst unter Anwendungsbedingungen, d.h. beim Ausbringen, unter intensivem Durchmischen, z.B. in Statikmischern, die gegebenenfalls auch Wasserstoff bildenden chemischen Reaktionspartner, dann gleichzeitig mit dem Katalysator in Berührung treten.

Das Mischungsverhältnis der Komponenten kann z.B. 1:1 bis 1:30 betragen. Die beim Ausbringen Treibgas bildenden, verflüssigte Kohlenwasserstoff-, Halogenkohlenwasserstoff- und/oder Ether-Lösungsmittel enthaltenden Komponenten sind, da unter Druck stehend, in einem Druckgefäß enthalten.

Die Volumenvergrößerung ist meist mehr als 1:5, vorzugsweise > 1:10, der Schaum sofort standfest und schnell zum Endvolumen expandiert.

Das nachfolgende Beispiel dient der Erläuterung der Erfindung.

| **Komponente A** | |
|---|---|
| α-ω-Dihydroxypolydimethylsiloxan (Viskosität von ca. 5000 mPaS) | 86 Teile |
| hochdisperse Kieselsäure (Aerosil R 202) | 13 Teile |
| organischer Platinkomplex (10 % in Xylol) | 1 Teil |
| Treibmittel R 134 | 100 Teile FCKW |
| | |

| **Komponente B** | |
|---|---|
| α-ω-Dihydroxypolydimethylsiloxan (Viskosität von ca. 5000 mPaS) | 59 Teile |
| Si-H funktionelles Polydimethylsiloxan | |
| (pentafunktionell mit 8 SiO) | 13 Teile |
| hochdisperse Kieselsäure (Aerosil R 202) | 13 Teile |
| Vinylsilan | 5 Teile |
| Treibmittel Propan/Butan | 40 Teile |
| (R 134) | 80 Teile |
| Mischungsverhältnis 1:1 | |

Die Schaumausbeute beträgt mindestens 51 aus 1 kg Grundkomponente. Die maximale Schaumdichte beträgt 200 kg/m³.
Der Schaum ist elastisch.

## Patentansprüche

1. Verschäumbare Zwei-Komponenten-Siliconmassen mit einem Gehalt an der Verschäumung dienenden Bestandteilen und gegebenenfalls weiteren Bestandeilen, **dadurch gekennzeichnet**, daß als verschäumungsmittel unter Anwendungsbedingungen Treibgas bildende Lösungsmittel enthalten sind.

2. Masse gemäß Patentanspruch 1, **dadurch gekennzeichnet**, daß als Treibgas wirkende Lösungsmittel niedere Kohlenwasserstoffe, niedere Fluorchlorkohlenwasserstoffe, insbesondere Fluorkohlenwasserstoffe und/oder Dimethylether enthalten sind.

3. Masse gemäß Patentanspruch 1 oder 2, **dadurch gekennzeichnet**, daß unter Anwendungsbedingungen durch chemische Reaktion Wasserstoff als Treibgas bildende Bestandteile enthalten sind.

4. Masse gemäß Patentanspruch 3, **dadurch gekennzeichnet**, daß vernetzbare Bestandteile zur Bildung von Wasserstoff als Treibgas enthalten sind.

5. Masse gemäß Patentanspruch 4, **dadurch gekennzeichnet**, daß als vernetzbare Bestandteile Si-H-funktionelle Gruppen enthaltende Siliconverbindungen und/oder Silane enthalten sind.
